# EUROPÄISCHE PATENTSCHRIFT

(11) **EP 2 601 665 B1**
(45) Veröffentlichungstag und Bekanntmachung des Hinweises auf die Patenterteilung: **16.11.2016**
(21) Anmeldenummer: 11748332.1
(22) Anmeldetag: 05.08.2011
(51) Int. Cl.: H01H 37/76, H02H 5/04, H01H 1/20, H01H 37/04

(54) **THERMISCHE ÜBERLASTSCHUTZVORRICHTUNG**
THERMAL OVERLOAD PROTECTION APPARATUS
DISPOSITIF DE PROTECTION THERMIQUE CONTRE LES SURCHARGES

(30) Priorität: 06.08.2010 DE 102010036909
(43) Veröffentlichungstag der Anmeldung: 12.06.2013
(73) Patentinhaber: Phoenix Contact GmbH & Co. KG, 32825 Blomberg (DE)
(72) Erfinder: MEYER, Thomas, 31868 Ottenstein (DE); PFÖRTNER, Steffen, 31832 Springe (DE); BRAND, Friedrich-Eckhard, 32683 Barntrup (DE); PÖTZSCH, Bernd, 32756 Detmold (DE)
(74) Vertreter: Michalski Hüttermann & Partner Patentanwälte mbB
(86) Internationale Anmeldenummer: PCT/EP2011/063560
(87) Internationale Veröffentlichungsnummer: WO 2012/017089

(56) Entgegenhaltungen:
- EP-A1- 1 467 603
- EP-A2- 1 970 932
- DE-A1- 19 708 651
- DE-C1- 19 710 183
- FR-A1- 2 670 624
- JP-U- 62 166 589
- US-A- 5 191 605

## Beschreibung

Die Erfindung betrifft eine thermische Überlastschutzvorrichtung zum Schutz eines elektrischen Bauelements, insbesondere elektronischen Bauelements, wobei die Überlastschutzvorrichtung eine Kurzschlusseinrichtung zum Kurzschließen von Anschlüssen des Bauelements und ein die Kurzschlusseinrichtung temperatursensitiv auslösendes Auslöseelement aufweist.

Eine derartige Überlastschutzvorrichtung ist aus der Offenlegungsschrift DE 10 2008 022 794 A1 bekannt. Diese beschreibt eine thermische Überlastschutzvorrichtung, die eine Kurzschlusseinrichtung mit Kurzschlussbügel zum Kurzschließen von Elektroden eines Überspannungsableiters und ein die Überlastschutzvorrichtung auslösendes Schmelzelement aufweist.

Die Überbeanspruchung von elektronischen Bauelementen kann dazu führen, dass diese außerhalb eines Nennbetriebsbereiches arbeiten. Dabei führt ein zum Beispiel durch eine reduzierte Isolationsfestigkeit des Bauelements hervorgerufener Leistungsumsatz an einem geschädigten Bauelement zu einer erhöhten Erwärmung. Wird eine Erwärmung des Bauelements über eine Zulässigkeitsschwelle hinaus nicht verhindert, kann dies zum Beispiel zur Schädigung umgebender Materialien, Entstehung von Rauchgasen oder zu einer Brandgefahr führen.

Diese Gefahren ergeben sich auch bei einer Anordnung von auf einem Leiterbahnenträger angeordneten Bauelementen wie zum Beispiel oberflächenmontierbaren Bauelementen. Zum Aufbau einer derartigen Anordnung wird der Leiterbahnenträger (die Leiterplatte/Platine) mit entsprechenden Bauelementen zum Beispiel von Automaten bestückt und verlötet. Aufgrund der dichten Bestückung ergibt sich oft nur ein sehr begrenzter Bauraum.

Die DE 197 10 183 C1 betrifft einen Schutzstecker mit einer thermischen Überlastschutzvorrichtung, um bei einer Erhöhung der Temperatur eines Überspannungsableiters durch das Abschmelzen einer Lotpille ein Schaltkontaktelement auszulösen. Das Schaltkontaktelement ist ein Federblech, welches beim Schmelzen des Lots der Lotpille mit einer Leiterplatte in Kontakt kommt, woraufhin SMD-Elemente einen Stromschutz bewirken.

Aus der US 5 191 605 A ist ein Telefonschutz mit drei Kontakten und einer thermischen Überlastschutzvorrichtung bekannt, um bei einer Erhöhung der Temperatur eines Massekontakts durch das Abschmelzen einer Lotpille zwei Schaltkontakte kurzzuschließen. Über den Massekontakt werden Spannungsstöße abgeleitet, so dass sich dieser bei anhaltenden Spannungsstößen erwärmt. Das Schaltkontaktelement ist ein Kurzschlussstab, welcher beim Schmelzen der Lotpille über eine leitende Feder Ströme an den Schaltkontakten an eine Erdklemme ableitet.

Die EP 1 970 932 A2 betrifft eine thermische Überwachungsvorrichtung für ein Bauelement. Die Überwachungsvorrichtung umfasst ein Schmelzelement in Verbindung mit dem Bauelement. Durch Schmelzen des Schmelzelements wird ein elektrischer Schaltkontakt ausgelöst, um über eine Unterbrechungseinrichtung eine Stromzufuhr zu dem Bauelement zu unterbrechen.

EP1467603 A1 offenbart eine thermische Überlastschutzvorrichtung gemäß dem Oberbegriff des Anspruchs 1.

Der Erfindung liegt die Aufgabe zu Grunde, eine thermische Überlastschutzvorrichtung anzugeben, welche wenig Bauraum benötigt, sicher auf thermische Überlast anspricht, sicher Kurzschließt und sich einfach in einen Montageprozess einer Montage, insbesondere Oberflächenmontage, von Bauelementen auf einem Leiterbahnenträger integrieren lässt.

Die Lösung der Aufgabe erfolgt erfindungsgemäß durch die Merkmale des unabhängigen Anspruchs. Vorteilhafte Ausgestaltungen der Erfindung sind in den Unteransprüchen angegeben.

Bei der erfindungsgemäßen Überlastschutzvorrichtung ist vorgesehen, dass die Kurzschlusseinrichtung mit mindestens einem Bereich an einem Leiterbahnenträger befestigt ist und sich mit mindestens einem weiteren Bereich über das Auslöseelement an dem auf dem Leiterbahnenträger angeordneten Bauelement und/oder mindestens einer einen der kurzzuschließenden Anschlüsse kontaktierenden Leiterbahnen abstützt. Die erfindungsgemäße Überlastschutzvorrichtung bietet den weiteren Vorteil, dass das Bauelement und im Besonderen die Lotverbindungen zwischen den Anschlüssen und den Leiterbahnen im Betrieb mechanisch wenig belastet werden. Ein weiterer Vorteil ist, dass die montierten Bauelemente anschließend mit Uberlastschutzvorrichtungen versehen werden können. Das Abstützen des weiteren Bereichs über das Auslöseelement am Bauelement schließt insbesondere ein Abstützen an einem der Anschlüsse des Bauelements ein. Mit Vorteil ist vorgesehen, dass das Auslöseelement (Aktivierungselement) als ein durch Schmelzen auslösendes Schmelzelement ausgebildet ist. Die Schmelztemperatur des Schmelzelements bestimmt die Auslösetemperatur, die somit über die Materialwahl einstellbar ist.

Bevorzugt ist vorgesehen, dass die Kurzschlusseinrichtung zum Kurzschließen der Anschlüsse mit diesen Anschlüssen verbundene Leiterbahnen elektrisch kontaktiert. Der Kurzschlussstrom wird dabei "großräumig" um das Bauteil herumgeführt.

Insbesondere ist vorgesehen, dass die Kurzschlusseinrichtung ein Federelement aufweist oder ein Federelement ist. Mittels eines Federelements lässt sich der zur Kontaktierung nötige Anpressdruck besonders einfach realisieren.

Alternativ oder zusätzlich ist mit Vorteil vorgesehen, dass die Kurzschlusseinrichtung ein Element aus einem Formgedächtnismaterial und/oder einem intumeszentem Material und/oder aus einem seine Form chemisch verändernden Material als Aktor aufweist. Dieser Aktor sorgt bei entsprechender Temperatur für den zur Kontaktierung nötigen Anpressdruck. Zusätzlich kann das Auslöseelement bei entsprechender Ausgestaltung der Kurzschlusseinrichtung vom Element aus einem Formgedächtnismaterial und/oder einem intumeszentem Material und/oder aus einem seine Form chemisch verändernden Material mitgebildet werden. Derartige Materialien werden von entsprechenden Funktionskunststoffen gebildet.

Ein elektrisch leitfähiges Element aus dem Formgedächtnismaterial, insbesondere ein elektrisch leitfähiges Formgedächtnismetall, kann alternativ zum Federelement die Kurzschlusseinrichtung bilden beziehungsweise mitbilden.

Gemäß einer bevorzugten Ausführungsform der Erfindung ist vorgesehen, dass sich die Kurzschlusseinrichtung mit dem weiteren Bereich über das Auslöseelement, insbesondere Schmelzelement, federnd am Bauelement abstützt. Auf diese Weise kann ein Vorspannen der Kurzschlusseinrichtung einfach verwirklicht werden.

Gemäß einer weiteren bevorzugten Ausführungsform der Erfindung ist vorgesehen, dass das Auslöseelement ein Material aufweist, dessen Auslösetemperatur niedriger ist als eine Schmelztemperatur einer Lotverbindung zwischen den Leiterbahnen und den kurzzuschließenden Anschlüssen des Bauelements. Insbesondere ist vorgesehen, dass das Schmelzelement ein Material aufweist, dessen Schmelzpunkt niedriger ist als der einer Lotverbindung zwischen den Leiterbahnen und den kurzzuschließenden Anschlüssen des Bauelements. Das Material ist bevorzugt ein elektrisch isolierendes Material, besonders bevorzugt ein Schmelzkunststoff. Ein derartiges Material ist für oberflächenmontierbare Bauelemente, die mittels "Reflow-Löten" an den Leiterbahnen befestigt/kontaktiert werden besonders geeignet, da die Aktivierungstemperatur des Schmelzelements unterhalb der Lottemperatur von etwa 250°C liegt. Insbesondere ist vorgesehen, dass der Temperaturunterschied der Schmelztemperaturen mindestens 20°C (20 K) beträgt. Dies bewirkt klar definierte zeitliche Abläufe in Folge der thermischen Überbelastung, die die Sicherheit und die Schaltdynamik erhöht. Schmelzkunststoff bietet weiterhin den Vorteil, dass er durch den Lötprozess nicht altert, da er nachträglich aufgebracht wird. Dies ist dadurch bedingt, dass seine Schmelztemperatur unterhalb der üblichen Temperatur beim Reflow-Lötprozess (Wiederaufschmelz-Lötprozess) liegt.

Verglichen mit einem Lot zeigt Schmelzkunststoff einen weicheren Übergang seiner Konsistenz am Schmelzpunkt. Dies hat den Vorteil, dass ein Auslöseelement aus Schmelzkunststoff auch im Auslösefall an seinem ursprünglichen Ort verbleibt und durch das Auslösen lediglich seine Form derart verändert, dass die Kurzschlusseinrichtung das Bauteil kurzschließen kann.

Gemäß einer Weiterbildung der Erfindung ist vorgesehen, dass die Kurzschlusseinrichtung an mindestens einen der kurzzuschließenden Anschlüsse permanent elektrisch gekoppelt ist. Bevorzugt ist die Anzahl der für den Kurzschluss zu schließenden Anschlüsse nur ein einziger Anschluss. Dadurch kommt es zu klar definierten, reproduzierbaren "Schaltprozessen".

Gemäß einer bevorzugten Ausführungsform der Erfindung ist vorgesehen, dass die Kurzschlusseinrichtung zwei Teile aufweist, die einander durch das Auslösen des Auslöseelements, insbesondere durch das Schmelzen des Schmelzelements, zum Kurzschließen kontaktieren.

Gemäß einer weiteren bevorzugten Ausführungsform der Erfindung ist vorgesehen, dass die Kurzschlusseinrichtung das Bauelement in zumindest einer Ausrichtung vollständig überspannt. Dies ist bei einer Montage der Bauelemente in einem ersten Montageschritt und einer Montage der Überlastschutzvorrichtung in einem anschließenden Montageschritt besonders einfach möglich.

Die Erfindung betrifft weiterhin eine Anordnung mit einem Leiterbahnenträger, mindestens einem darauf angeordneten Bauelement und mindestens einer vorstehend genannten Überlastschutzvorrichtung. Das Bauelement ist bevorzugt ein Überspannungsschutzableiter, insbesondere auf Halbleiterbasis (Suppressordiode, Varistor, etc.) oder ein gasgefüllter Überspannungsableiter oder ein Widerstand.

Nachfolgend wird die Erfindung unter Bezugnahme auf die anliegende Zeichnung anhand bevorzugter Ausführungsformen näher erläutert.

Es zeigen
Fig. 1 ein elektronisches Bauelement und eine thermische Überlastschutzvorrichtung im nichtausgelösten Betriebszustand gemäß einer ersten Ausführungsform der Erfindung,
Fig. 2 das Bauelement und die thermische Überlastschutzvorrichtung der Figur 1 im ausgelösten Betriebszustand,
Fig. 3 ein elektronisches Bauelement und eine thermische Überlastschutzvorrichtung im nichtausgelösten Betriebszustand gemäß einer zweiten Ausführungsform der Erfindung,
Fig. 4 das Bauelement und die thermische Überlastschutzvorrichtung der Figur 3 im ausgelösten Betriebszustand,
Fig. 5 ein elektronisches Bauelement und eine thermische Überlastschutzvorrichtung im nichtausgelösten Betriebszustand gemäß einer dritten Ausführungsform der Erfindung,
Fig. 6 das Bauelement und die thermische Überlastschutzvorrichtung der Figur 5 im ausgelösten Betriebszustand,
Fig. 7 ein elektronisches Bauelement und eine thermische Überlastschutzvorrichtung im nichtausgelösten Betriebszustand gemäß einer vierten Ausführungsform der Erfindung und
Fig. 8 das Bauelement und die thermische Überlastschutzvorrichtung der Figur 7 im ausgelösten Betriebszustand.

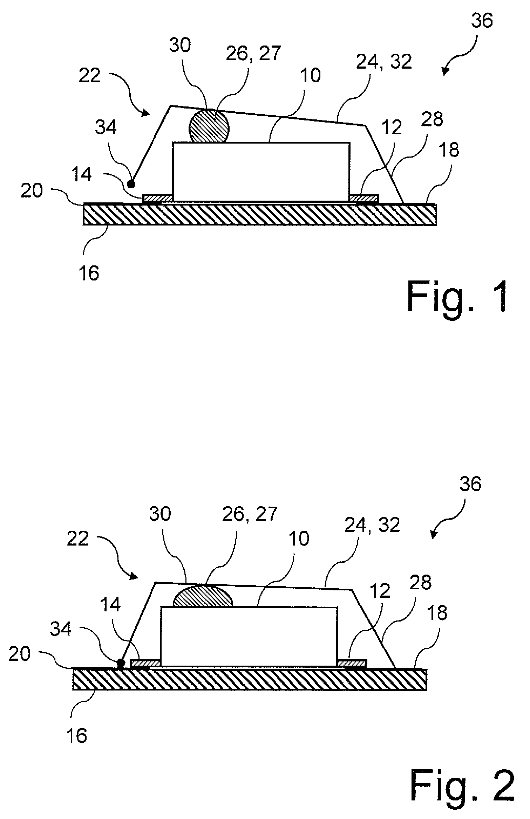

Die Fig. 1 zeigt ein als elektronisches Bauelement ausgebildetes elektrisches Bauelement 10 mit zwei Anschlüssen 12, 14, das mittels dieser Anschlüsse 12, 14 auf einem Leiterbahnenträger 16 befestigt ist. Dazu sind die Anschlüsse 12, 14 mittels (nicht gezeigter) Lotverbindungen mit zugeordneten Leiterbahnen 18, 20 des Leiterbahnenträgers 16 leitend verbunden. Oberhalb des Bauelements 10 ist eine thermische Überlastschutzvorrichtung 22 mit einer als Kurzschlussbügel ausgebildeten Kurzschlusseinrichtung 24 zum Kurzschließen der Anschlüsse 12, 14 und einem die Kurzschlusseinrichtung 24 temperatursensitiv auslösenden Auslöseelements 26 angeordnet. Das Auslöseelement 26 ist dabei ein durch Schmelzen auslösendes Schmelzelement 27. Das Material des Schmelzelements 27 ist Schmelzkunststoff, der eine Schmelztemperatur aufweist, die deutlich geringer ist, als die des Lots der Lotverbindungen. Das Bauelement 10 ist als oberflächenmontierbares Bauelement (SMD-Bauelement) ausgebildet und dementsprechend auf der Oberfläche des als Leiterplatte ausgebildeten Leiterbahnenträgers 16 montiert.

Die Kurzschlusseinrichtung 24 ist mit einem als Endbereich ausgebildeten Bereich 28 an einer der Leiterbahnen 18 elektrisch leitend befestigt und stützt sich über einen als Mittelbereich ausgebildeten weiteren Bereich 30 über das Schmelzelement 27 an der Oberseite des Bauelements 10 federnd ab. Dazu weist die Kurzschlusseinrichtung 24 zumindest einen als Federelement 32 ausgebildeten Teilbereich auf. Ein als anderer Endbereich ausgebildeter anderer Bereich 34 ist in dieser Anordnung 36 von Bauelement 10, Leiterbahnenträger 16 und Überlastschutzvorrichtung 22 oberhalb der anderen Leiterbahn 20 beabstanded gehalten.

Es ergibt sich folgende Funktion: Kommt es zu einer thermischen Überbeanspruchung des Bauelements 10, so erwärmt sich dieses bis es über seine Oberfläche auch das Schmelzelement 27 auf eine Temperatur erwärmt hat, die im Bereich seiner Schmelztemperatur liegt. Schmilzt das Schmelzelement 27, so wird der andere Endbereich 34 durch die Federkraft des vorgespannten Federelements 32 auf die andere Leiterbahn 20 gepresst, sodass die Kurzschlusseinrichtung 24 eine das Bauelement 10 vollständig überspannende Kurzschlussbrücke bildet.

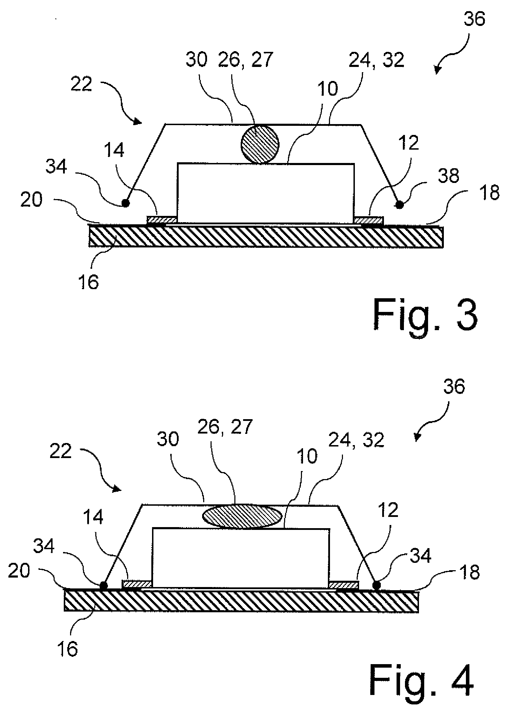

Die Figuren 3 und 4 beziehungsweise 5 und 6 sowie 7 und 8 entsprechen im Wesentlichen den Figuren 1 und 2, sodass im Weiteren nur noch auf die Unterschiede eingegangen wird.

Bei der Ausführungsform der Figuren 3 und 4 ist die Kurzschlusseinrichtung T-förmig ausgebildet, wobei der am Leiterbahnenträger befestigte eine Bereich 28 der Kurzschlusseinrichtung 24 nicht sichtbar ist. Im Unterschied zu der Überlastschutzvorrichtung der Figuren 1 und 2 gibt es hier zwei als andere Endbereiche ausgebildete andere Bereiche 34, 38. Diese sind im normalen Betrieb oberhalb der jeweils zugeordneten Leiterbahnen 18, 20 beabstanded gehalten.

Kommt es zu einer thermischen Überbeanspruchung des Bauelements 10, so erwärmt sich dieses bis es über seine Oberfläche auch das Schmelzelement 27 auf eine Temperatur erwärmt hat, die im Bereich seiner Schmelztemperatur liegt. Schmilzt das Schmelzelement 27, so werden die anderen Endbereiche 34, 38 durch die Federkraft des vorgespannten Federelements 32 auf die zugeordneten Leiterbahnen 18, 20 gepresst, sodass die Kurzschlusseinrichtung 24 eine das Bauelement 10 vollständig überspannende Kurzschlussbrücke bildet.

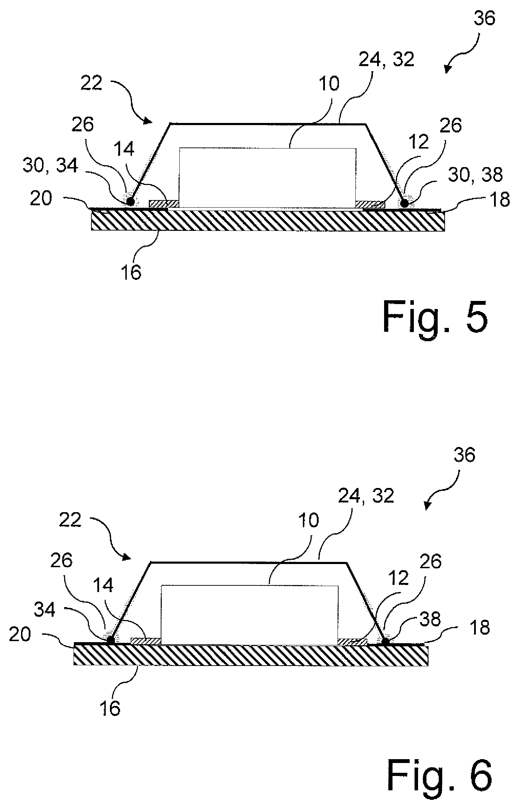

Die Ausführungsform der Figuren 5 und 6 ist eine Alternative zur Ausführungsform der Figuren 3 und 4. Statt eines Schmelzelements 27 auf dem Bauelement 10 sind zwei die anderen Bereiche 34, 38 umgebende Schmelzelement 27 vorgesehen. Die Kurzschlusseinrichtung 24 stützt sich mit den als weiteren Bereichen 30 ausgebildeten anderen Bereiche 34, 38 über die Schmelzelemente 27 an den die kurzzuschließenden Anschlüsse 12, 14 kontaktierenden Leiterbahnen 18, 20 ab.

Kommt es zu einer thermischen Überbeanspruchung des Bauelements 10, so erwärmen dessen Anschlüsse 12, 14 auch die Leiterbahnen 18, 20 bis diese auch die Schmelzelemente 27 auf eine Temperatur erwärmt haben, die im Bereich ihrer Schmelztemperatur liegt. Schmelzen die Schmelzelemente 27, so werden die anderen Endbereiche 34, 38 durch die Federkraft des vorgespannten Federelements 32 auf die zugeordneten Leiterbahnen 18, 20 gepresst, sodass die Kurzschlusseinrichtung 24 eine das Bauelement 10 vollständig überspannende Kurzschlussbrücke bildet.

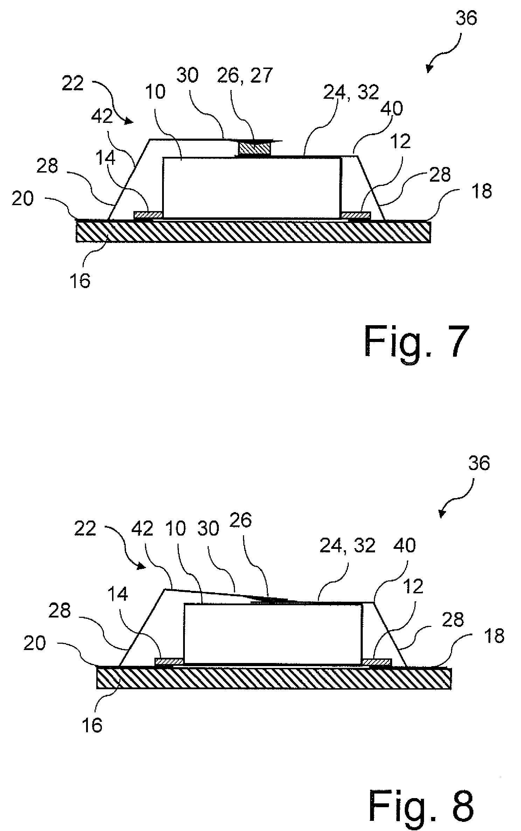

Die Ausführungsform der Figuren 7 und 8 ist schließlich eine Ausführungsform mit einer zweigeteilten Kurzschlusseinrichtung 24 mit zwei an den Leiterbahnen 18, 20 befestigten einen Enden 28. Die beiden Teile 40, 42 sind im Betrieb durch das Schmelzelement 27 voneinander getrennt. Dabei stützt sich der weitere Bereich 30 des einen Teils 42 der Kurzschlusseinrichtung an dem auf dem Leiterbahnenträger 16 angeordneten Bauelement 10 ab. Schmilzt dieses aufgrund der Wärme des Bauelements 10, so kontaktieren die Teile 40, 42 einander und ein Kurzschluss entsteht.

Die Kurzschlusseinrichtung 24 kann alternativ zum Federelement 32 auch durch ein elektrisch leitfähiges Formgedächtnismetall gebildet werden (nicht gezeigt). Das Federelement 32 kommt vorgespannt, auf dem Schmelzelement 27 abgestützt, zum Einsatz.

Die Bewegung kann auch durch das Aufbringen einer Kraft mittels eines Aktors auf Basis intumeszenter Stoffe oder einer thermische aktivierten chemischen Reaktion mit der eine Volumenzunahme einher gehen, hervorgerufen werden. Dabei sind entsprechende Auslöseelemente 26, die insbesondere auch die Aktoren der Kurzschlußeinrichtung 24 sind, vorgesehen.

Im Betriebszustand ist der von dem Federelement 32 und der Leiterbahn 18, 20 oder einer Kontaktierungsfläche auf dem Leiterbahnenträger (Leiterplatte) 16 oder am Bauelement 10 gebildete Schalter geöffnet. Eine unzulässige Erwärmung des Bauelements 10 über die Aktivierungs- oder Auslösetemperatur führt zur Aktivierung der Vorrichtung 22:
- Das Federelement 32 schließt aufgrund des erweichenden Schmelzkunststoffs das Bauelement 10 kurz.
- Das Formgedächtniselement führt beim Überschreiten der Umwandlungstemperatur eine irreversible Bewegung durch, die das Bauelement 10 kurzschließt,
- Das intumeszente Material oder die auf einer chemischen Reaktion basierende Volumenzunahme üben eine Kraft auf das Federelement 32 aus, sodass dieses den Kontakt schließt. Die elektrische Kontaktierung führt zu einem Kurzschluss des elektrischen Bauelements 10. Das Bauelement 10 ist damit in einen sicheren Zustand überführt.

### Bezugszeichenliste

- Bauelement: 10
- Anschluss: 12
- Anschluss: 14
- Leiterbahnenträger: 16
- Leiterbahn: 18
- Leiterbahn: 20
- Überlastschutzvorrichtung: 22
- Kurzschlusseinrichtung: 24
- Auslöseelement: 26
- Schmelzelement: 27
- Bereich: 28
- Bereich, weiterer: 30
- Federelement: 32
- Bereich, anderer: 34
- Anordnung: 36
- Bereich, anderer: 38
- Teil: 40
- Teil: 42

## Patentansprüche

1. Thermische Überlastschutzvorrichtung (22) zum Schutz eines auf einem Leiterbahnenträger (16) montierten elektrischen Bauelements (10), insbesondere elektronischen Bauelements, wobei die Überlastschutzvorrichtung (22) eine Kurzschlusseinrichtung (24) zum Kurzschließen von mittels Lotverbindungen mit zugeordneten Leiterbahnen (18, 20) des Leiterbahnenträgers (16) leitend verbundenen Anschlüssen (12, 14) des Bauelements (10) und ein die Kurzschlusseinrichtung (24) temperatursensitiv auslösendes Auslöseelement (26) aufweist, wobei die Kurzschlusseinrichtung (24) mit mindestens einem Bereich (28) an einem Leiterbahnenträger (16) befestigt ist, **dadurch gekennzeichnet, dass** die Kurzschlusseinrichtung (24) sich mit mindestens einem weiteren Bereich (30) über das Auslöseelement (26) an dem auf dem Leiterbahnenträger (16) angeordneten Bauelement (10) und/oder mindestens einer einen der kurzzuschließenden Anschlüsse (12, 14) kontaktierenden Leiterbahnen (18, 20) abstützt.

2. Überlastschutzvorrichtung nach Anspruch 1, wobei das Auslöseelement (26) als ein durch Schmelzen auslösendes Schmelzelement (27) ausgebildet ist.

3. Überlastschutzvorrichtung nach einem der vorhergehenden Ansprüche, wobei die Kurzschlusseinrichtung (24) ein Federelement (32) aufweist oder ein Federelement (32) ist.

4. Überlastschutzvorrichtung nach einem der vorhergehenden Ansprüche, wobei die Kurzschlusseinrichtung (24) ein Element aus einem Formgedächtnismaterial und/oder einem intumeszenten Material und/oder aus einem seine Form chemisch verändernden Material als Aktor aufweist.

5. Überlastschutzvorrichtung nach einem der vorhergehenden Ansprüche, wobei sich die Kurzschlusseinrichtung (24) mit dem weiteren Bereich (30) über das Auslöseelement (26) federnd am Bauelement (10) abstützt.

6. Überlastschutzvorrichtung nach einem der vorhergehenden Ansprüche, wobei das Auslöseelement (26) ein Material aufweist, dessen Auslösetemperatur niedriger ist als eine Schmelztemperatur einer Lotverbindung zwischen den Leiterbahnen (18, 20) und den kurzzuschließenden Anschlüssen (12, 14) des Bauelements (10).

7. Überlastschutzvorrichtung nach einem der vorhergehenden Ansprüche, wobei die Kurzschlusseinrichtung (24) an mindestens einen der kurzzuschließenden Anschlüsse (12, 14) permanent elektrisch gekoppelt ist.

8. Überlastschutzvorrichtung nach einem der vorhergehenden Ansprüche, wobei die Kurzschlusseinrichtung (24) zwei Teile (40, 42) aufweist, die einander durch das Auslösen des Auslöseelements (26) zum Kurzschließen kontaktieren.

9. Anordnung mit einem Leiterbahnenträger (16), mindestens einem darauf angeordneten Bauelement (10) und mindestens einer Überlastschutzvorrichtung (22) nach einem der Ansprüche 1 bis 8.

## Claims

1. A thermal overload protection device (22) for protecting an electric component (10), in particular electronic component, mounted on a conductor track carrier (16), wherein the overload protection device (22) comprises a short-circuit means (24) for short-circuiting connection points (12, 14) of the component (10) conductively connected to associated conductor tracks (18, 20) of the conductor track carrier (16) by means of soldered connections, and comprises a trip element (26) tripping the short-circuit means (24) in a temperature-sensitive manner, wherein the short-circuit means (24) is fastened by at least one region (28) to a conductor track carrier (16), **characterised in that** the short-circuit means (24) is supported on the component (10) arranged on the conductor track carrier (16) by at least one further region (30) via the trip element (26) and/or by at least one conductor track (18, 20) contacting one of the short-circuiting connection points (12, 14).

2. The overload protection device according to claim 1, wherein the trip element (26) is formed as a fuse element (27) that trips by melting.

3. The overload protection device according to any one of the preceding claims, wherein the short-circuit means (24) has a spring element (32) or is a spring element (32).

4. The overload protection device according to any one of the preceding claims, wherein the short-circuit device (24) comprises, as actuator, an element made of a shape-memory material and/or an intumescent material and/or made of a material that chemically changes its form.

5. The overload protection device according to any one of the preceding claims, wherein the short-circuit means (24) is resiliently supported on the component (10) by the further region (30) via the trip element (26).

6. The overload protection device according to any one of the preceding claims, wherein the trip element (26) comprises a material of which the tripping temperature is lower than a melting point of a soldered connection between the conductor tracks (18, 20) and the short-circuiting connection points (12, 14) of the component (10).

7. The overload protection device according to any one of the preceding claims, wherein the short-circuit means (24) is permanently electrically coupled to at least one of the short-circuiting connection points (12, 14).

8. The overload protection device according to any one of the preceding claims, wherein the short-circuit means (24) comprises two parts (40, 42), which contact one another by the tripping of the trip element (26) to produce a short circuit.

9. An assembly comprising a conductor track carrier (16), at least one component (10) arranged thereon, and at least one overload protection device (22) according to any one of claims 1 to 8.

## Revendications

1. Dispositif de protection contre une surcharge thermique (22) pour la protection d'un composant électrique (10) monté sur un support de piste conductrice (16), notamment, un composant électronique, où le dispositif de protection contre une surcharge (22) présente un dispositif de court-circuit (24) pour court-circuiter des raccords (12, 14) du composant (10) reliés de manière conductrice avec des pistes conductrices (18, 20) du support de piste conductrice (16) au moyen de liaisons par soudure, et un élément de déclenchement (26) déclenchant de manière sensible à la température le dispositif de court-circuit (24), où le dispositif de court-circuit (24) est fixé sur un support de piste conductrice (16) avec au moins une région (28), **caractérisé en ce que** le dispositif de court-circuit (24) s'appuie avec au moins une autre région (30) sur le composant (10) disposé sur le support de piste conductrice (16) par l'intermédiaire de l'élément de déclenchement (26) et/ou sur au moins l'une des pistes conductrices (18, 20) étant en contact avec l'un des raccords (12, 14) de court-circuit.

2. Dispositif de protection contre une surcharge selon la revendication 1, où l'élément de déclenchement (26) est conçu sous la forme d'un élément fusible (27) se déclenchant par une fusion.

3. Dispositif de protection contre une surcharge selon l'une des revendications précédentes, où le dispositif de court-circuit (24) présente un élément élastique (32), ou est un élément élastique (32).

4. Dispositif de protection contre une surcharge selon l'une des revendications précédentes, où le dispositif de court-circuit (24) présente un élément constitué d'un matériau à mémoire de forme, et/ou un matériau intumescent, et/ou un matériau modifiant chimiquement sa forme, en tan qu'acteur.

5. Dispositif de protection contre une surcharge selon l'une des revendications précédentes, où le dispositif de court-circuit (24) s'appuie de manière élastique sur le composant (10) avec une autre région (30) par l'intermédiaire de l'élément de déclenchement (26).

6. Dispositif de protection contre une surcharge selon l'une des revendications précédentes, où l'élément de déclenchement (26) présente un matériau dont la température de dissolution est inférieure à une température de fusion d'une liaison par soudure entre les pistes conductrices (18, 20) et les raccords (12, 14) de court-circuitage du composant (10).

7. Dispositif de protection contre une surcharge selon l'une des revendications précédentes, où le dispositif de court-circuit (24) est couplé électriquement de manière permanente à au moins l'un des raccords (12, 14) de court-circuitage.

8. Dispositif de protection contre une surcharge selon l'une des revendications précédentes, où le dispositif de court-circuit (24) présente deux parties (40, 42) qui se mettent en contact l'une avec l'autre pour le court-circuitage par la dissolution de l'élément de déclenchement (26).

9. Ensemble avec un support de piste conductrice (16), au moins un composant (10) disposé au-dessus et au moins un dispositif de protection contre les surcharges (22) selon l'une des revendications 1 à 8.
